# EUROPÄISCHE PATENTSCHRIFT

(11) **EP 3 424 747 B1**
(45) Veröffentlichungstag und Bekanntmachung des Hinweises auf die Patenterteilung: **18.03.2020**
(21) Anmeldenummer: 18166233.9
(22) Anmeldetag: 09.04.2018
(51) Int. Cl.: B60B 3/04, B60B 21/10

(54) **FAHRZEUGRAD AUS EINER STEILSCHULTERFELGE UND EINER RADSCHÜSSEL**
VEHICLE WHEEL MADE OF A DROP-CENTRE RIM AND A WHEEL DISC
ROUE DE VÉHICULE D'UNE JANTE À BORD OBLIQUE ET D'UN DISQUE DE ROUE

(30) Priorität: 30.06.2017 DE 102017211126
(43) Veröffentlichungstag der Anmeldung: 09.01.2019
(73) Patentinhaber: Continental Reifen Deutschland GmbH, 30165 Hannover (DE)
(72) Erfinder: Kleffmann, Jens, 30453 Hannover (DE); Biabanaki, Seyedomidreza, 30419 Hannover (DE)
(74) Vertreter: Finger, Karsten

(56) Entgegenhaltungen:
- EP-A1- 0 607 784
- DE-A1- 3 904 804
- DE-A1-102006 031 709
- US-A1- 2004 066 087

## Beschreibung

Die Erfindung betrifft ein Fahrzeugrad aus einer Steilschulterfelge und einer mit dieser verbundenen Radschüssel für schlauchlose Nutzfahrzeugreifen, wobei die Steilschulterfelge ein Tiefbett, eine äußere und eine innere Felgenschulter, ein zylindrisches Übergangsteil zwischen dem Tiefbett und der inneren Felgenschulter und ein äußeres und ein inneres Felgenhorn aufweist. Eine entsprechende Felge ist aus Dokument DE 10 2006 031709 A1 bekannt.

Steilschulterfelgen sind üblicherweise für die Montage von 17,5 Zoll, 19,5 Zoll, 22,5 Zoll und 24,5 Zoll Nutzfahrzeugreifen, beispielsweise für LKW-Zugmaschinen, LKW-Auflieger oder LKW-Anhänger oder für Busse, vorgesehen. Steilschulterfelgen, beispielsweise die weit verbreiteten 15°-Steilschulterfelgen, sind von der ETRTO (European Tyre and Rim Technical Organisation) in deren Standards-Manuals seit vielen Jahren unverändert spezifiziert, ermöglichen die Montage und Demontage von Nutzfahrzeugreifen über beide Felgenhörner und sind einteilige Felgen. Die Wulstbereiche der zur Montage auf Steilschulterfelgen vorgesehenen Nutzfahrzeugreifen sind auf beiden Reifenseiten identisch im Aufbau und der Geometrie, wobei kleine Abweichungen in der Geometrie und bezüglich Materialstärken zwischen den beiden Wulstbereichen fertigungstechnisch bedingt auftreten können.

Der Senkung des Rollwiderstandes von Nutzfahrzeugreifen und damit der Reduktion des Kraftstoffverbrauches von Nutzfahrzeugen wird schon seit vielen Jahren besondere Aufmerksamkeit gewidmet. Das Hauptaugenmerk diesbezüglicher Maßnahmen und Entwicklungen liegt bei den Nutzfahrzeugreifen selbst, beispielsweise dem konstruktiven Aufbau der Reifen oder der Zusammensetzung der Gummimischungen für Bauteile des Nutzfahrzeugreifens, insbesondere der Kautschukmischungen für Laufstreifen.

Der Erfindung liegt die Aufgabe zu Grunde, gänzlich neue Lösungen zur Reduktion des Rollwiderstandes unter Einbezug des Fahrzeugrades in Betracht zu ziehen. Dabei sollen vor allem Maßnahme gefunden werden, die eine Montage üblicher und herkömmlich ausgeführter Nutzfahrzeugreifen auf einer Steilschulterfelge ermöglichen.

Gelöst wird die gestellte Aufgabe erfindungsgemäß dadurch, dass das eine Felgenhorn eine um 5,0 mm bis 20,0 mm größere Felgenhornhöhe aufweist als das andere Felgenhorn.

Umfangsreiche rechnerische Simulationen mittels FEM (Finite-Elemente-Methode) mit Reifen- und Felgenmodellen haben ergeben, dass sich mit dieser Maßnahme eine Reduktion des Rollwiderstandes eines auf einer Steilschulterfelge montierten Nutzfahrzeugreifens um bis zu 1,5 % erzielen lässt. Die Unterschiede in den Felgenhornhöhen sind in einem Bereich, die keine konstruktiven Änderungen oder Anpassungen der Wulstbereiche der Nutzfahrzeugreifen erfordern, um einen guten Sitz von Nutzfahrzeugreifen auf Fahrzeugrädern gemäß der Erfindung sicherzustellen. Erfindungsgemäß ausgeführte Fahrzeugräder weisen lediglich eine vorgegebene Montagerichtung für Nutzfahrzeugreifen auf, da die Montage über jene Felgenhornseite zu erfolgen hat, welche die geringere Felgenhornhöhe aufweist.

Bei einer bevorzugten Ausführung beträgt die Differenz der Felgenhornhöhen 5,0 mm bis 12,0 mm. Besonders bevorzugt ist eine Ausführung, bei der die Differenz der Felgenhornhöhen 8,0 mm bis 10,0 mm beträgt. Diesbezüglich vorgenommene rechnerische Simulationen haben ergeben, dass bei einer Differenz der Felgenhornhöhen in der Größenordnung von 8,0 mm bis 10,0 mm die erzielbare Reduktion des Rollwiderstandes besonders ausgeprägt ist und in der Größenordnung von 1,5 % beträgt. Die Reduktion des Rollwiderstandes und damit des Kraftstoffverbrauches des Kraftfahrzeuges dürfte auf die mechanischen Wechselwirkungen zwischen dem jeweiligen Reifen und der Felge zurückzuführen sein.

Das höhere Felgenhorn kann entweder das radaußenseitig befindliche, äußere Felgenhorn oder das radinnenseitig befindliche, innere Felgenhorn sein. Das niedrigere Felgenhorn ist ein bei Steilschulterfelgen übliches Felgenhorn und weist daher auch die Höhe eines solchen auf.

Dabei ist eine Ausführung bevorzugt, bei der die Felgenhornhöhe des eine geringere Höhe aufweisenden Felgenhornes 12,7 mm ± 0,5 mm beträgt. Eine solche Felgenhornhöhe weisen die Felgenhörner von Steilschulterfelgen, die für Nutzfahrzeugreifen vorgesehen sind und gemäß der ETRTO spezifiziert sind, auf. Das Fahrzeugrad besitzt daher auch gemäß einer besonders bevorzugten Ausführung eine Steilschulterfelge, welche, abgesehen vom Felgenhorn mit der größeren Felgenhornhöhe, eine gemäß der ETRTO spezifizierte Steilschulterfelge, insbesondere eine 15°-Steilschulterfelge, ist.

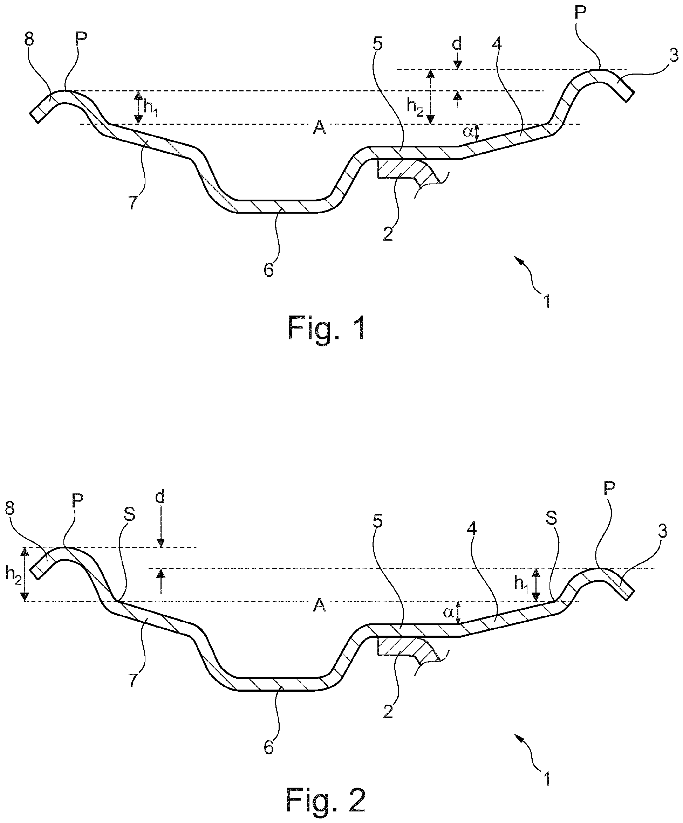

Weitere Merkmale, Vorteile und Einzelheiten der Erfindung werden nun anhand der Zeichnung, die Ausführungsbeispiele darstellt, näher beschrieben. Dabei zeigen Fig. 1 und Fig. 2 je eine Ausführungsvariante eines erfindungsgemäßen Fahrzeugrades in einer Schnittansicht.

Fig. 1 und Fig. 2 zeigen Teilquerschnitte einer einteiligen Steilschulterfelge 1 für schlauchlose Nutzfahrzeugreifen mit einer lediglich angedeuteten Radschüssel 2, die Steilschulterfelge 1 weist von der Radaußenseite zur Radinnenseite gesehen als Felgenabschnitte ein äußeres Felgenhorn 3, eine äußere Felgenschulter 4, ein zylindrisches Übergangsteil 5 (Ledge), ein Tiefbett 6, eine innere Felgenschulter 7 und ein äußeres Felgenhorn 8 auf. Die Radschüssel 2 ist am zylindrischen Übergangsabschnitt 5 angeschweißt.

Die Steilschulterfelge 1 ist insbesondere eine 15°-Steilschulterfelge, bei welcher die Felgenschultern 4 und 7 unter einem Winkel α von 15° ± 1° gegenüber der Horizontalen bzw. der axialen Richtung geneigt sind. Die 15°-Steilschulterfelge ist insbesondere eine gemäß den Vorgaben der ETRTO (European Tyre and Rim Technical Organisation) ausgeführte 15°-Steilschulterfelge, beispielsweise eine gemäß dem ETRTO-Standards-Manual 2003 im Abschnitt Rims Commercial-Vehicles auf Seite 230 spezifizierten 15°-Steilschulterfelge (15° Drop-Center-Rim).

An der Außenkontur der Steilschulterfelge 1 befinden sich an den äußeren Enden der Felgenschultern 4, 7 Schnittstellen S mit einer horizontal bzw. in axialer Richtung verlaufenden Geraden A. Von jeder Schnittstelle S wird im rechten Winkel zur Geraden A, demnach in radialer Richtung, bis zum höchsten, radial äußersten Punkt P der Felgenhörner 3, 8 die jeweilige Felgenhornhöhe h₁, h₂ ermittelt. Bei der in Fig. 1 gezeigten Ausführung weist das äußere Felgenhorn 3 eine Höhe h₂ auf, die größer ist als die Höhe h₁ des inneren Felgenhorns 8. Bei der in Fig. 2 gezeigten Ausführung weist das innere Felgenhorn 8 eine Höhe h₂ auf, die größer ist als die Höhe h₁ des äußeren Felgenhornes 3. Die Höhendifferenz d zwischen h₁ und h₂ beträgt 5 mm bis 20 mm, vorzugsweise 5 mm bis 12 mm und besonders bevorzugt 8 mm bis 10 mm. Bei 15°-Steilschulterfelgen, welche gemäß der ETRTO spezifiziert sind, entspricht die Höhe h₁ 12,7 mm ± 0,5 mm.

Eine Höhendifferenz d der Felgenhornhöhen im angegebenen Bereich erfordert keine Änderungen im Aufbau bzw. der Ausführung der Wulstbereiche des auf der Felge zu montierenden Nutzfahrzeugreifens und dieser kann daher entsprechend dem derzeitigen Stand der Technik in den Wulstbereichen übereinstimmende Aufbauten bzw. Geometrien aufweisen. Die Montage des Nutzfahrzeugreifens hat über jene Felgenhornseite zu erfolgen, die die geringere Felgenhornhöhe h₁ aufweist.

Umfangreiche FEM-Berechnungen mit entsprechenden Reifen- und Felgenmodellen haben ergeben, dass auf erfindungsgemäßen Steilschulterfelgen montierte Nutzfahrzeugreifen einen um bis zu 1,5 % geringeren Rollwiderstand aufweisen, als Nutzfahrzeugreifen, die auf herkömmlich, mit gleich gestalteten Felgenhörnern ausgeführten Steilschulterfelgen montiert sind.

### Bezugszeichenliste

- 1......................: Steilschulterfelge
- 2......................: Radschüssel
- 3......................: Felgenhorn
- 4......................: äußere Felgenschulter
- 5 ......................: Übergangsteil
- 6......................: Tiefbett
- 7......................: innere Felgenschulter
- 8......................: Felgenhorn
- α......................: Winkel
- A.....................: Gerade
- d......................: Höhendifferenz
- h₁, h₂................: Felgenhornhöhe
- P......................: Punkt
- S......................: Schnittstelle

## Patentansprüche

1. Fahrzeugrad aus einer Steilschulterfelge (1) und einer mit dieser verbundenen Radschüssel (2) für schlauchlose Nutzfahrzeugreifen, wobei die Steilschulterfelge (1) ein Tiefbett (6), eine äußere und eine innere Felgenschulter (4, 7), ein zylindrisches Übergangsteil (5) zwischen dem Tiefbett (6) und der äußeren Felgenschulter (4) und ein äußeres und ein inneres Felgenhorn (3, 8) aufweist, **dadurch gekennzeichnet,**
**dass** das eine Felgenhorn (3, 8) eine um 5 mm bis 20 mm größere Felgenhornhöhe (h₂) aufweist als das andere Felgenhorn (3, 8).

2. Fahrzeugrad nach Anspruch 1, **dadurch gekennzeichnet, dass** die Differenz der Felgenhornhöhen (h₁, h₂) 5 mm bis 12 mm beträgt.

3. Fahrzeugrad nach Anspruch 1 oder 2, **dadurch gekennzeichnet, dass** die Differenz der Felgenhornhöhen (h₁, h₂) 8 mm bis 10 mm beträgt.

4. Fahrzeugrad nach einem der Ansprüche 1 bis 3, **dadurch gekennzeichnet, dass** das äußere Felgenhorn (3) die größere Felgenhornhöhe (h₂) aufweist.

5. Fahrzeugrad nach einem der Ansprüche 1 bis 3, **dadurch gekennzeichnet, dass** das innere Felgenhorn (8) die größere Felgenhornhöhe (h₂) aufweist.

6. Fahrzeugrad nach einem der Ansprüche 1 bis 5, **dadurch gekennzeichnet, dass** die Felgenhornhöhe (h₁) des eine geringere Höhe aufweisenden Felgenhornes (3, 8) 12,7 mm ± 0,5 mm beträgt.

7. Fahrzeugrad nach einem der Ansprüche 1 bis 6, **dadurch gekennzeichnet, dass** die Steilschulterfelge (1), abgesehen vom Felgenhorn mit der größeren Felgenhornhöhe (h₂), eine gemäß der ETRTO spezifizierte 15°-Steilschulterfelge ist.

## Claims

1. Vehicle wheel composed of a drop-centre rim (1) and a wheel disc (2) connected to the latter for tubeless utility vehicle tyres, wherein the drop-centre rim (1) has a drop centre (6), an outer and an inner rim shoulder (4, 7), a cylindrical ledge (5) between the drop centre (6) and the outer rim shoulder (4), and an outer and an inner rim flange (3, 8), **characterized in that** the one rim flange (3, 8) has a rim flange height (h₂) which is greater by 5 mm to 20 mm then the other rim flange (3, 8).

2. Vehicle wheel according to Claim 1, **characterized in that** the difference between the rim flange heights (h₁, h₂) is 5 mm to 12 mm.

3. Vehicle wheel according to Claim 1 or 2, **characterized in that** the difference between the rim flange heights (h₁, h₂) is 8 mm to 10 mm.

4. Vehicle wheel according to one of Claims 1 to 3, **characterized in that** the outer rim flange (3) has the greater rim flange height (h₂).

5. Vehicle wheel according to one of Claims 1 to 3, **characterized in that** the inner rim flange (8) has the greater rim flange height (h₂).

6. Vehicle wheel according to one of Claims 1 to 5, **characterized in that** the rim flange height (h₁) of the rim flange (3, 8) having a lower height is 12.7 mm ± 0.5 mm.

7. Vehicle wheel according to one of Claims 1 to 6, **characterized in that** the drop-centre rim (1), apart from the rim flange with the greater rim flange height (h₂), is a 15° drop-centre rim specified according to the European Tyre and Rim Technical Organization (ETRTO).

## Revendications

1. Roue de véhicule constituée d'une jante à bord oblique (1) et d'un disque de roue (2) connecté à celle-ci pour un pneu de véhicule utilitaire sans chambre à air, la jante à bord oblique (1) présentant une base creuse (6), un bord de jante extérieur et un bord de jante intérieur (4, 7), une partie de transition cylindrique (5) entre la base creuse (6) et le bord de jante extérieur (4) et un rebord de jante extérieur et un rebord de jante intérieur (3, 8),
**caractérisée en ce que**
l'un des rebords de jante (3, 8) présente une hauteur de rebord de jante (h₂) supérieure de 5 mm à 20 mm à l'autre rebord de jante (3, 8).

2. Roue de véhicule selon la revendication 1, **caractérisée en ce que** la différence entre les hauteurs de rebord de jante (h₁, h₂) est de 5 mm à 12 mm.

3. Roue de véhicule selon la revendication 1 ou 2,
**caractérisée en ce que** la différence entre les hauteurs de rebord de jante (h₁, h₂) est de 8 mm à 10 mm.

4. Roue de véhicule selon l'une quelconque des revendications 1 à 3, **caractérisée en ce que** le rebord de jante extérieur (3) présente la plus grande hauteur de rebord de jante (h₂).

5. Roue de véhicule selon l'une quelconque des revendications 1 à 3, **caractérisée en ce que** le rebord de jante intérieur (8) présente la plus grande hauteur de rebord de jante (h₂).

6. Roue de véhicule selon l'une quelconque des revendications 1 à 5, **caractérisée en ce que** la hauteur de rebord de jante (h₁) du rebord de jante (3, 8) présentant une hauteur plus faible est de 12,7 mm +- 0,5 mm.

7. Roue de véhicule selon l'une quelconque des revendications 1 à 6, **caractérisée en ce que** la jante à bord oblique (1), à l'exception du rebord de jante avec la plus grande hauteur de rebord de jante (h₂), est une jante à bord oblique de 15° selon la spécification ETRTO.
